# EUROPÄISCHE PATENTSCHRIFT

(11) **EP 2 013 045 B1**
(45) Veröffentlichungstag und Bekanntmachung des Hinweises auf die Patenterteilung: **28.04.2010**
(21) Anmeldenummer: 07724396.2
(22) Anmeldetag: 20.04.2007
(51) Int. Cl.: B60J 1/17

(54) **HUBFENSTER**
LIFTING WINDOW
FENETRE LEVABLE

(30) Priorität: 29.04.2006 DE 102006020108
(43) Veröffentlichungstag der Anmeldung: 14.01.2009
(73) Patentinhaber: RICHARD FRITZ GMBH + CO. KG, 74354 Besigheim (DE)
(72) Erfinder: GOLUB, Silvester, 74336 Barckenheim (DE); WASER, Andreas, 71563 Affalterbach (DE)
(74) Vertreter: Kastner, Hermann
(86) Internationale Anmeldenummer: PCT/EP2007/003459
(87) Internationale Veröffentlichungsnummer: WO 2007/124874

(56) Entgegenhaltungen:
- DE-A1- 2 843 634
- GB-A- 1 447 576
- GB-A- 2 262 957
- US-A- 4 935 986

## Beschreibung

Bei Kraftfahrzeugen ist es üblich, in den Fahrzeugtüren das Fenster als Hubfenster auszubilden, so dass dieses Fenster geschlossen oder geöffnet werden kann. Zu diesem Zweck sind im Hohlraum der Tür zwei Führungsschienen vorhanden, die mit Konstruktionsteilen der Tür verbunden sind. Diese Führungsschienen weisen zwei Führungsstege auf, die einen bestimmten gleichbleibenden lichten Abstand haben, der auf die Dicke des Randbereiches der Scheibe abgestimmt ist. Die beiden Führungsschienen und ihre Führungsstege sind in Richtung der Bewegungsbahn der Scheibe auf deren Form und auf deren Bewegungsbahn abgestimmt, damit bei der Hubbewegung die Scheibe sich in den Führungsschienen nicht verklemmt. Ein solches Fenster ist aus dem Dokument GB 2 262 957 A bekannt.

Bei der Montage des Kraftfahrzeuges werden die Türen gegenüber der Karosserie ausgerichtet, damit die Außenseite der Türen mit den anschließenden Flächen der Karosserie fluchtet. Dieses Ausrichten erfolgt einerseits an den Scharnieren der Türen und andererseits am Türschloss. Bei einer derart ausgerichteten Tür kann sich ergeben, dass die Scheibe des Hubfensters mit den anschließenden Karosserieteilen oder auch mit einer unmittelbar daran anschließenden weiteren Scheibe nicht fluchtet. Außer einer Beeinträchtigung des Aussehens des Kraftfahrzeuges kann dieser Versatz während der Fahrt des Kraftfahrzeuges auch zu lästigen Windgeräuschen führen, und zwar insbesondere dann, wenn bei dem in Fahrtrichtung vorne gelegenen Hubfenster die Scheibe gegenüber der nach hinten anschließenden Scheibe nach Innen zurücksteht oder, umgekehrt ausgedrückt, wenn die nach hinten anschließende Scheibe über die Fluchtlinie der davor angeordneten Scheibe nach außen übersteht.

Diese ungünstigen Wirkungen können auch dann auftreten, wenn die aneinander anschließenden Scheiben in ihrer vertikalen Erstreckung gegeneinander versetzt sind. Das kann aufgrund der Fertigungstoleranzen der Teile und/oder auch aufgrund der unvermeidlichen Toleranzen bei der Montage der Führungsschienen in der Tür entstehen, so dass sie gegenüber der Außenseite der Tür vom Sollwert abweichen.

Der Erfindung liegt die Aufgabe zugrunde, ein Hubfenster so zu gestalten, dass seine Scheibe auf möglichst einfache Weise auf die anschließenden Teile der Karosserie und/oder einer unmittelbar anschließenden Scheibe eingestellt werden kann.

Diese Aufgabe wird mit einem Hubfenster mit den im Anspruch 1 angegebenen Merkmalen gelöst.

Dadurch, dass die Scheibe im Bereich wenigstens eines Seitenrandes mit einer Führungsleiste versehen ist, die an einer vom unteren Scheibenrand entfernt gelegenen Stelle angeordnet ist und die auf die zugeordnete Führungsschiene abgestimmt ist und so anstelle des Randbereiches des Seitenrandes der Scheibe mit der zugeordneten Führungsschiene zusammen wirken kann, und dadurch, dass diese Führungsleiste durch eine Einstelleinrichtung mit der Scheibe verbunden ist, kann der Abstand der Führungsleiste von der Scheibe eingestellt werden. Dadurch kann die Scheibe des Hubfensters auf ihre Sollstellung und auf ihre Sollbewegung gegenüber den anschließenden Teilen eingestellt werden, auch wenn ihre Führungsschiene von ihrer Sollstellung abweicht.

In den Unteransprüchen sind vorteilhafte Ausgestaltungen des Hubfensters angegeben, die auf einfache Weise dazu beitragen, die Scheibe des Hubfenster auf die gewünschte Einstellung gegenüber den anschließenden Teilen der Karosserie zu bringen.

Im Folgenden wird die Erfindung anhand von Ausführungsbeispielen näher erläutert, die in den Zeichnungen dargestellt sind. Es zeigen:
- Fig. 1: eine ausschnittweise dargestellte schematische Seitenansicht eines Kraftfahrzeuges mit zwei Tü- ren mit Hubfenster in angehobenem Zustand;
- Fig. 2: eine Seitenansicht wie Fig. 1 mit den Hubfens- tern in abgesenktem Zustand;
- Fig. 3: eine ausschnittweise dargestellte schematische Draufsicht der Seite eines Kraftfahrzeuges mit zwei Türen:
- Fig. 4: auf die Führungsschiene;
- Fig. 5: eine räumliche Darstellung der Einstellein- richtung aus einer anderen Blickrichtung;
- Fig. 6: eine Seitenansicht der Einstelleinrichtung;
- Fig. 7: eine Stirnansicht der Einstelleinrichtung;
- Fig. 8: eine teilweise geschnitten dargestellte Drauf- sicht der Einstelleinrichtung mit zugeordneter Führungsschiene.

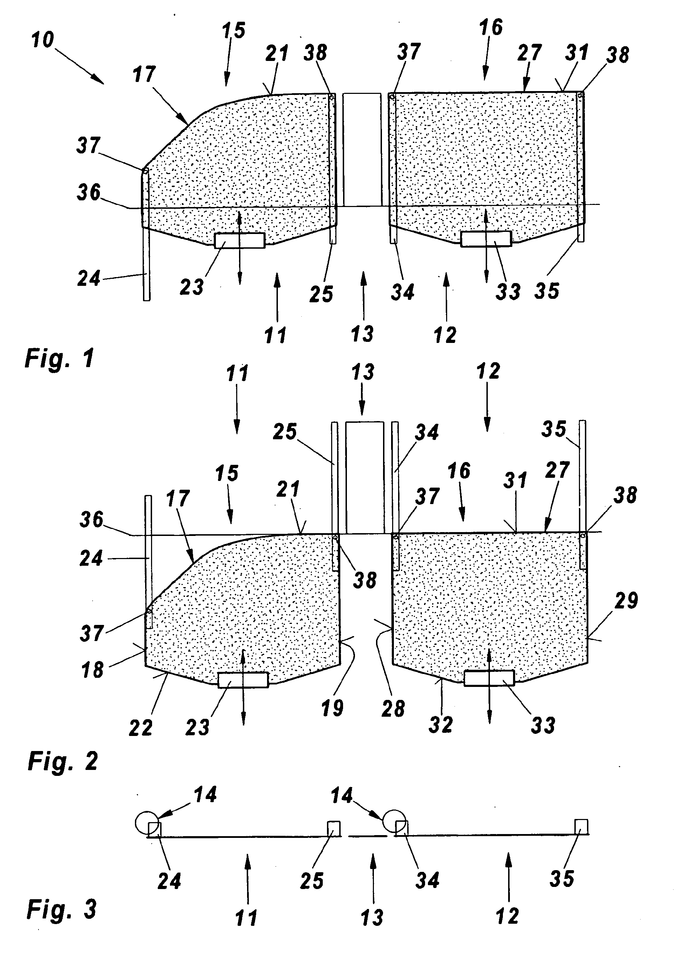

Aus Fig.1 und Fig.2 ist der Seitenbereich eines Kraftfahrzeuges 10 mit zwei Türen, der Fronttür 11 und der Fondtür 12, und einem dazwischen angeordneten Karosserieteil, der B-Säule, zu ersehen. In Fig.3 sind diese Teile von oben zu sehen, wobei zusätzlich die Scharniere 14 der Fronttür 11 und der Fondtür 12 zu sehen sind.

Wie aus Fig.1 und Fig.2 weiter zu ersehen ist, weist die Fronttür 11 ein Hubfenster 15 und die Fondtür 12 ein Hubfenster 16 auf. Das vordere Hubfenster 15 weist eine Scheibe 17 auf, deren in der Bewegungsrichtung der Scheibe verlaufenden beiden Seitenränder 18 und 19 (Fig. 2) parallel zueinander ausgerichtet sind. Der obere Rand 21 der Scheibe 17 verläuft teilweise gerade und teilweise gekrümmt und verläuft zumindest näherungsweise parallel zum Innenrand des Fensterausschnittes der Fronttür 11. Der untere Rand 22 der Scheibe 17 hat in seiner Mitte einen geraden und horizontal verlaufenden Abschnitt und seitlich daran anschließende leicht schräg verlaufende Abschnitte. An dem mittleren Abschnitt des unteren Randes 22 ist eine Hubplatte 23 angeordnet, die mit der Scheibe 17 fest verbunden ist. Diese Hubplatte 23 ist Teil einer im Übrigen nicht dargestellten Hubvorrichtung, mittels der die Scheibe 17 in die in Fig.1 dargestellte angehobene Stellung und in die in Fig.2 dargestellte abgesenkte Stellung bewegt werden kann. Das Hubfenster 15 weist außerdem zwei Führungsschienen 24 und 25 auf, die die Scheibe 17 bei ihrer Hubbewegung führen.

In ähnlicher Weise weist das hinter Hubfenster 16 eine Scheibe 27 auf, deren in der Bewegungsrichtung der Scheibe verlaufenden beiden Seitenränder 28 und 29 (Fig. 2) parallel zueinander ausgerichtet sind. Der obere Rand 31 der Scheibe 27 verläuft gerade und zumindest näherungsweise parallel zum Innenrand des Fensterausschnittes der Fondtür 21. Der unter Rand 32 der Scheibe 27 hat in seiner Mitte einen geraden und horizontal verlaufenden Abschnitt und seitlich daran anschließende leicht schräg verlaufende Abschnitte. An dem mittleren Abschnitt des unteren Randes 32 ist eine Hubplatte 33 angeordnet, die mit der Scheibe 27 fest verbunden ist. Diese Hubplatte 33 ist Teil einer im Übrigen nicht dargestellten Hubvorrichtung, mittels der die Scheibe 27 in die in Fig. 1 dargestellte angehobene Stellung und in die in Fig. 2 dargestellte abgesenkte Stellung bewegt werden kann. Das Hubfenster 16 weist außerdem zwei Führungsschienen 34 und 35 auf, die die Scheibe 27 bei ihrer Hubbewegung führen.

Wie vor allem aus Fig. 2 ersichtlich ist, kann jede der beiden Scheiben 17 und 27 so weit abgesenkt werden, dass ihr oberer Rand 21 bzw. 31 auf gleicher Höhe mit dem unteren Rand des Fensterausschnittes der Fronttür 11 oder der Fondtür 12 und damit auf gleicher Höhe mit der sogenannten Schachtkante 36 der Türen steht.

In Fig. 1 und Fig. 2 sind sowohl am vorderen Hubfenster 15, wie auch am hinteren Hubfenster 16 Einstelleinrichtungen 37 und 38 angedeutet, von denen die Einstelleinrichtung 37 in der Nähe der Übergangsstelle vom oberen Scheibenrand 21 bzw. 31 zum linken Seitenrand 18 bzw. 28 gelegen ist und von denen die andere Einstelleinrichtung 38 in der Nähe der Übergangsstelle vom oberen Scheibenrand 21 bzw. 31 zum rechten Seitenrand 19 bzw. 29 gelegen ist. Je nach den Gegebenheiten des Kraftfahrzeuges kann es auch genügen, nur an einem Seitenrand, insbesondere am hinteren Seitenrand 19 und 29, oder auch nur an einer Scheibe, insbesondere an der Scheibe 17 des Hubfensters 15 der Fronttür 11, eine Einstelleinrichtung anzubringen und die Scheiben an den übrigen Seitenrändern in herkömmlicher Weise direkt in der zugeordneten Führungsschiene zu führen.

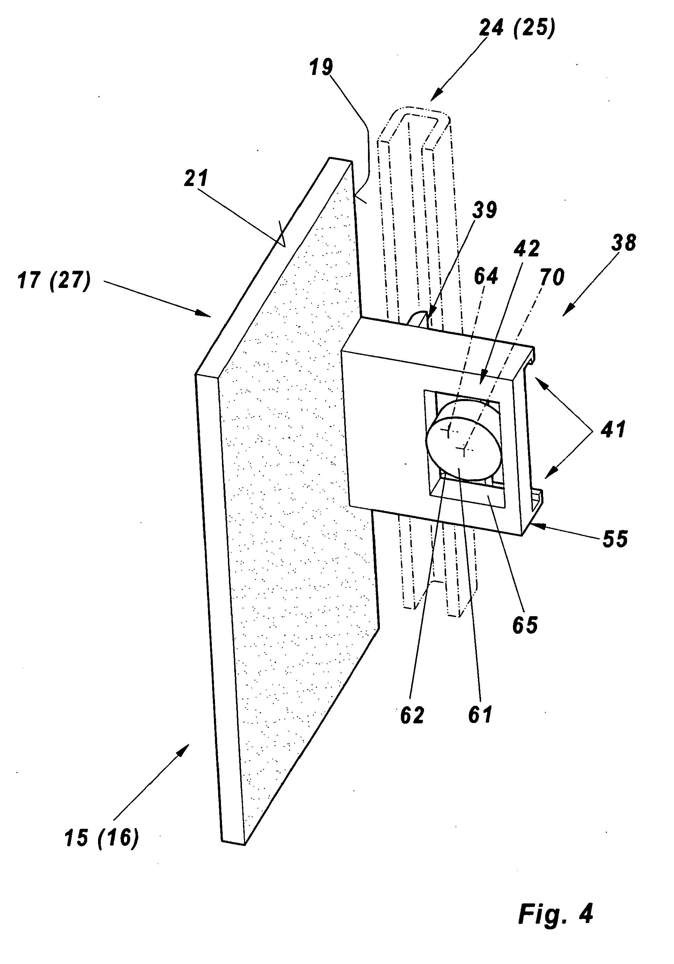

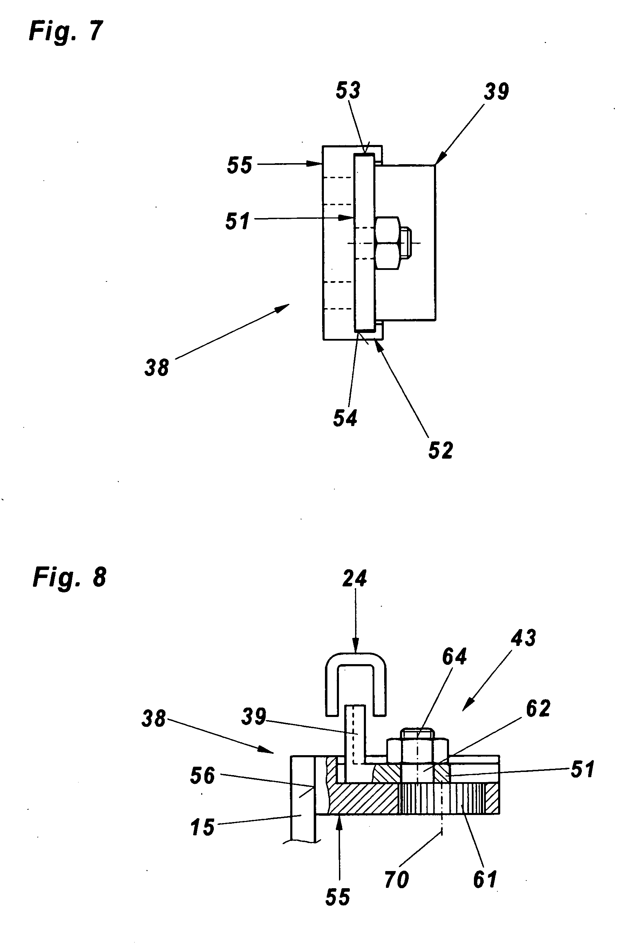

Jede der Einstelleinrichtungen 37 und 38 weist eine Führungsleiste 39 auf, die an Stelle des Randbereiches der zugeordneten Scheibe 17 bzw. 27 mit der zugeordneten Führungsschiene 24 bzw. 25 zusammenwirkt, wie in Fig. 4 und Fig. 8 beispielhaft gezeigt ist.

Die beiden Einstelleinrichtungen 37 und 38 für eine der Scheiben 17 oder 27 sind gleich ausgebildet und nur hinsichtlich der Verwendung mal am linken Seitenrand und mal am rechten Seitenrand der Scheibe spiegelbildlich montiert. Im Folgenden wird deshalb nur die Einstelleinrichtung 38 (Fig. 4) im Einzelnen erläutert.

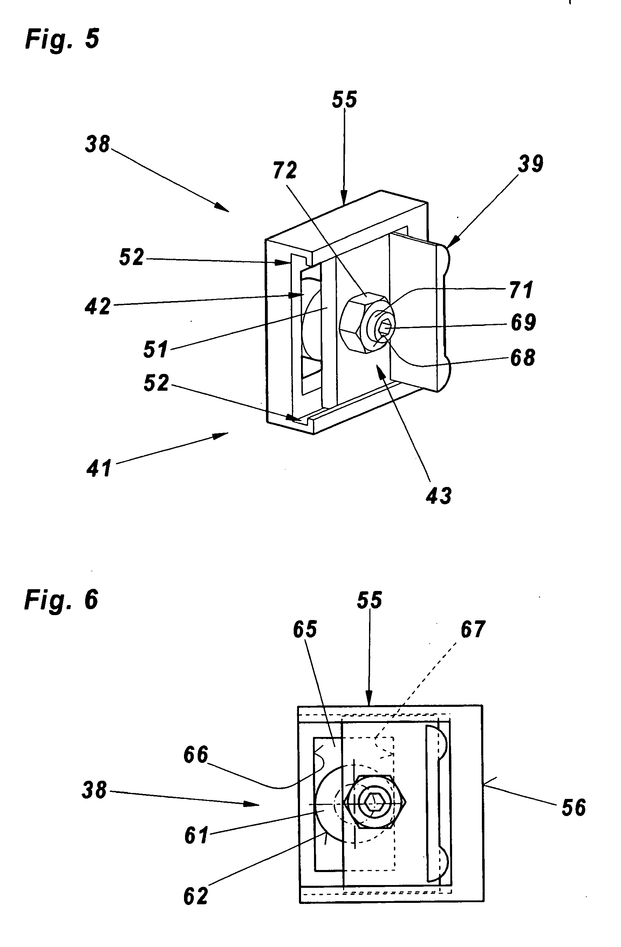

Die Einstelleinrichtung 38 vereinigt in sich eine Führungsvorrichtung 41 (Fig. 4 und Fig. 5), eine Verstellvorrichtung 42 (Fig. 4 und Fig. 5) und eine Feststellvorrichtung 43 (Fig. 5).

Mittels der Führungsvorrichtung 41 ist die Führungsleiste 39 zumindest annähernd senkrecht zur Scheibe 15 beweglich geführt. Mittels der Verstellvorrichtung 42 kann die Führungsleiste 39 auf den gewünschten Abstand von der Scheibe 17 eingestellt werden. Mittels der Feststellvorrichtung 43 wird die Führungsleiste 39 in dem eingestellten Abstand fixiert.

Die Führungsvorrichtung 41 wird durch einen Führungsschlitten 51 und durch eine darauf abgestimmte Schlittenführung 52 gebildet (Fig. 7). Der Führungsschlitten 51 ist plattenförmig ausgebildet und hat zwei parallele Ränder 53 und 54. Die Führungsleiste 39 ist mit dem Führungsschlitten 51 fest verbunden (Fig. 5). Die Schlittenführung 52 wird durch einen C-förmig ausgebildeten Teil eines äußerlich im Wesentlichen quaderförmigen Grundkörpers 55 gebildet. Die Schlittenführung 52 umgreift mit ihrem C-Profil teilweise den Führungsschlitten 51 (Fig. 5 und Fig. 7).

Der Grundkörper 55 weist auf der der Scheibe 15 zugekehrten Stirnseite eine Anlagefläche 56 auf, deren Form auf die Form der Scheibe 15 abgestimmt ist (Fig. 8). Der Grundkörper 55 liegt mit seiner Anlagefläche 56 an der Scheibe 15 an und ist mit ihr dauerhaft verbunden.

Die Verstellvorrichtung 42 weist einen Verstellkörper 61 auf, der scheibenförmig ausgebildet ist (Fig. 4). Der Verstellkörper 61 ist mit einer zylindrischen Welle 62 fest verbunden. Die Welle 62 ist in einem zylindrischen Durchgangsloch des Führungsschlittens 51 drehbar gelagert (Fig. 8). Die Umfangsfläche 63 des Verstellkörpers 61 hat einen sich ändernden Abstand von der Achse 64 der Welle 62. Das bedeutet, dass der Verstellkörper 61 als Nockenscheibe oder als Exzenterscheibe ausgebildet ist.

Die Verstellvorrichtung 42 weist außerdem eine Kulisse 65 für den Verstellkörper 61 auf (Fig. 4). Die Kulisse 65 wird durch eine Ausnehmung in der Wand des Grundkörpers 55 gebildet, die in demjenigen Bereich gelegen ist, an der Führungsschlitten 51 anliegt und entlang gleitet. Diese Ausnehmung ist der Einfachheit halber als beiderseits offener Wanddurchbruch dargestellt. Je nach dem Herstellungsverfahren des Grundkörpers 55 kann diese Ausnehmung auch als Vertiefung der Wand des Grundkörpers 55 ausgeführt werden, deren Rückwand geschlossenen ist.

Die Kulisse 65 hat zwei zumindest annähernd parallel zur Anlagefläche 56 des Grundkörpers 55 ausgerichtet Wandflächen 66 und 67, deren lichter Abstand auf die Abmessungen des Verstellkörpers 61 abgestimmt ist (Fig. 6). Das gilt vor allem bei einer Ausbildung des Grundkörpers 55 als Exzenterscheibe mit kreiszylindrischer Umfangsfläche 63 mit der Zylinderachse 70.

Die Welle 62 des Verstellkörpers 61 ist an ihrem vom Verstellkörper 61 abgekehrten Ende mit Betätigungsflächen 68 für den Einsatz eines Werkzeuges versehen. Diese werden durch die Flächen eines Innensechskantes gebildet (Fig. 5), die an einer mittigen Ausnehmung 69 der Welle 62 angebracht sind.

Die Feststellvorrichtung 43 wird unter anderem durch einen Längenabschnitt 71 der Welle 62 gebildet, der aus dem Durchgangsloch des Führungsschlittens 51 herausragt (Fig. 5) und der mit einem Außengewinde versehen ist.

Als weiterer Teil der Feststellvorrichtung 43 dient eine Mutter 72, die auf das Außengewinde des Längenabschnittes 71 abgestimmt ist und darauf aufgeschraubt ist.

Zum Einstellen der Führungsleiste 39 gegenüber der Scheibe 17 und damit gegenüber dem mit ihr verbundenen Grundkörper 55 der Einstelleinrichtung 38 wird an der Feststellvorrichtung 43 die Mutter 72 gelockert. Über die Betätigungsflächen 68 wird mit Hilfe eines darauf abgestimmten Werkzeuges die Welle 62 und der mit ihr verbundene Verstellkörper 61 in der einen oder anderen Drehrichtung verdreht. Da der Verstellkörper 61 in der Kulisse 65 von deren beiden Wandflächen 66 und 67 geführt wird, verändert sich dabei die Lage der Achse 64 der Welle 62 in seitlicher Richtung, d.h. in Richtung auf die Scheibe 17 zu oder von ihr weg. Diese seitliche Verlagerung überträgt sich auf den Führungsschlitten 51, so dass sich die Relativlage der Führungsleiste 39 zur Scheibe 17 verändert. Wenn die gewünschte Einstellung erreicht ist, wird die Mutter 72 wieder angezogen, wobei die Welle 62 über die Betätigungsflächen 68 mittels eines Werkzeuges am Drehen gehindert wird. Danach ist die Verstellvorrichtung 42 in der neuen Stellung fixiert.

Als Werkstoff für die Teile der Einstelleinrichtung 37 und 38 kommen Metalle und Nichtmetalle in Betracht. Bei einer Metallausführung muss auch auf einen ausreichenden Korrosionsschutz der Teile geachtet werde. Zweckmäßiger ist es, die Teile aus Kunststoff ausreichender Festigkeit, z.B. aus Polyamid, herzustellen, und zwar im Spritzgussverfahren. Dann entfallen zusätzliche Maßnahmen für den Korrosionsschutz.

Wie aus Fig. 5 und Fig. 6 ersichtlich ist, hat die die Führungsleiste 39 einen Aufriss, der derjenigen einer Hantel ähnlich ist, wobei die eine Seite flach ausgebildet ist. Auf der anderen Seite sind zwei abgerundete Wülste vorhanden. Sie erleichtern die Gleitbewegung der Führungsleiste 39 in der zugeordneten Führungsschiene 24. Diese ist in Fig. 4 und Fig. 8 der Übersichtlichkeit halber mit einer größeren lichten Weite dargestellt, als sie in Wirklichkeit ist. Die Innenseite ihrer Seitenwangen können mit je einem Keder belegt sein, um die Gleitbewegung der Führungsleiste 39 zu erleichtern.

### Bezugszeichenliste

- 10: Kraftfahrzeug
- 11: Fronttür
- 12: Fondtür
- 13: B-Säule
- 14: Scharnier
- 15: Hubfenster
- 16: Hubfenster
- 17: Scheibe
- 18: Seitenrand
- 19: Seitenrand

- 21: oberer Rand
- 22: unterer Rand
- 23: Hubplatte
- 24: Führungsschiene
- 25: Führungsschiene

- 27: Scheibe
- 28: Seitenrand
- 29: Seitenrand

- 31: oberer Rand
- 32: unterer Rand
- 33: Hubplatte
- 34: Führungsschiene
- 35: Führungsschiene
- 36: Schachtkante
- 37: Einstelleinrichtung
- 38: Einstelleinrichtung
- 39: Führungsleiste

- 41: Führungsvorrichtung
- 42: Verstellvorrichtung
- 43: Feststellvorrichtung

- 51: Führungsschlitten
- 52: Schlittenführung
- 53: Rand
- 54: Rand
- 55: Grundkörper
- 56: Anlagefläche

- 61: Verstellkörper
- 62: Welle
- 63: Umfangsfläche
- 64: Achse
- 65: Kulisse
- 66: Wandfläche
- 67: Wandfläche
- 68: Betätigungsflächen
- 69: Ausnehmung
- 70: Zylinderachse
- 71: Längenabschnitt
- 72: Mutter

## Patentansprüche

1. Hubfenster insbesondere für Kraftfahrzeug,
mit den Merkmalen:
- es ist eine auf und ab bewegbare Scheibe (17; 27) vorhanden, die zwei Seitenränder (18, 19; 28, 29) aufweist,
- es sind Führungsschienen (24, 25; 34, 35) vorhanden,
- - die mit einem Karosserieteil des Kraftfahrzeuges verbunden sind,
- - von denen jede mindestens zwei Führungsstege aufweist, die einen bestimmten gleichbleibenden lichten Abstand haben,
- es ist eine Hubvorrichtung vorhanden,
- - die mit dem unteren Rand (22; 32) der Scheibe (17; 27) verbunden ist und
- - die eine Führung für den unteren Rand (22; 32) der Scheibe (17; 27) bildet,
**gekennzeichnet durch** die Merkmale
- die beiden Seitenränder (18, 19; 28, 29) der Scheibe (17; 27) sind parallel zu einander ausgerichtet und verlaufen in der Bewegungsrichtung der Scheibe (17; 27), wobei sie Führungsränder der Scheibe (17; 27) bilden,
- für jeden dieser Seitenränder (18, 19; 28, 29) ist eine Führungsschiene (24, 25; 34, 35) vorhanden, die einen Verlauf hat, der auf die Bewegungsbahn des ihr zugekehrten Seitenrandes (18, 19; 28, 29) der Scheibe (17; 27) abgestimmt ist,
- die Scheibe (17; 27) ist im Bereich wenigstens eines der Seitenränder (18, 19; 28, 29) mit einer Führungsleiste (39) versehen,
- - die an einer vom unteren Scheibenrand (22; 32) entfernt gelegenen Stelle angeordnet ist und
- - die auf die zugeordnete Führungsschiene (24, 25; 34, 35) abgestimmt ist und an Stelle des Randbereiches des Seitenrandes (18, 19; 28, 29) der Scheibe (17; 27) mit dieser Führungsschiene (24, 25; 34, 35) zusammenwirkt,
- die Führungsleiste (39) ist über eine Einstelleinrichtung (37; 38) mit der Scheibe (17; 27) verbunden, mittels der der Abstand der Führungsleiste (39) von der Scheibe (17; 27) einstellbar ist.

2. Hubfenster nach Anspruch 1, mit den Merkmalen:
- die Einstelleinrichtung (38) weist eine Führungsvorrichtung (41) auf, mittels der die Führungsleiste (39) zumindest annähernd senkrecht zur Scheibe (17) bewegbar ist,
- die Einstelleinrichtung (38) weist eine Verstellvorrichtung (42) auf, mittels der die Führungsleiste (39) relativ zur Scheibe (17) in beiden Richtungen verstellbar ist und
- die Einstelleinrichtung (38) weist eine Feststellvorrichtung (43) auf, mittels der die Führungsleiste (39) in einem bestimmten Abstand von der Scheibe (17) fixierbar ist.

3. Hubfenster nach Anspruch 2, mit den Merkmalen:
- die Führungsvorrichtung (41) wird durch einen Führungsschlitten (51) und eine darauf abgestimmte Schlittenführung (52) gebildet,
- der Führungsschlitten (51) ist plattenförmig ausgebildet und weist zwei parallele Ränder (53; 54) auf,
- die Schlittenführung (52) ist C-förmig ausgebildet und umgreift zumindest teilweise die Ränder (53; 54) des Führungsschlittens (51)und
- die Führungsleiste (39) ist mit dem Führungsschlitten (51) fest verbunden.

4. Hubfenster nach Anspruch 3, mit den Merkmalen:
- die Schlittenführung (52) ist an einem Grundkörper (55) der Einstelleinrichtung (38) angeordnet oder als Teil dieses Grundkörpers (55) ausgebildet,
- der Grundkörper (55) weist eine Anlagefläche (56) auf, die parallel zur Scheibe (17) ausgerichtet ist und
- der Grundkörper (55) liegt mit seiner Anlagefläche (56) an der Scheibe (17) an und ist mit ihr dauerhaft verbunden.

5. Hubfenster nach Anspruch 2, mit den Merkmalen:
- die Verstellvorrichtung (42) weist einen Verstellkörper (61) auf,
- - der scheibenförmig ausgebildet ist,
- - der mit einer zylindrischen Welle (62) fest verbunden ist, die in einem zylindrischen Durchgangsloch des Führungsschlittens (51) drehbar gelagert ist,
- - dessen Umfangsfläche (63) einen sich ändernden Abstand von der Wellenachse (64) hat und vorzugsweise als Nockenfläche oder als Kreisexzenterfläche ausgebildet ist,
- die Verstellvorrichtung (42) weist eine Kulisse (65) auf,
- - die durch eine Ausnehmung am Grundkörper (55) gebildet wird und
- - die zwei zumindest annähernd parallel zur Scheibe (17) ausgerichtete Wandflächen (66; 67) aufweist, deren lichter Abstand auf die Abmessungen des Verstellkörpers (61) abgestimmt ist, und
- der Verstellkörper (61) und/oder seine Welle (62) ist mit Betätigungsflächen (68) für den Einsatz eines Werkzeuges versehen, die vorzugsweise als Außensechskant oder als Innensechskant ausgebildet sind.

6. Hubfenster nach Anspruch 2, mit den Merkmalen:
- die Feststellvorrichtung (43) wird gebildet
- - durch einen Längenabschnitt (71) der Welle (62) des Verstellkörpers (61), der aus dem Führungsschlitten (51) herausragt und mit einem Außengewinde versehen ist, und
- - durch eine Mutter (72), die auf dem Außengewinde der Welle (62) festziehbar ist.

7. Hubfenster nach Anspruch 5, mit den Merkmalen:
- die Kulisse (65) für den Verstellkörper (61) wird gebildet
- - entweder durch einen offenen Durchbruch der Wand des Grundkörpers (55).
- - oder durch eine Vertiefung der Wand des Grundkörpers (55) mit geschlossener Rückwand.

## Claims

1. A lifting window, in particular for a motor vehicle, having the features:
- a pane (17; 27) movable up and down is present, which has two lateral edges (18, 19; 28, 29),
- guiding rails (24, 25; 34, 35) are present,
- - which are connected to a body part of the motor vehicle,
- - each of which has at least two guide flanges at a given, constant, clear spacing,
- a lifting device is present,
- - which is connected to the lower edge (22; 32) of the pane (17; 27) and
- - which forms a guide for the lower edge (22; 32) of the pane (17; 27),
**characterised by** the features
- the two lateral edges (18, 19; 28, 29) of the pane (17; 27) are directed parallel to one another and run in the direction of motion of the pane (17; 27), wherein they form guide edges of the pane (17; 27),
- a guiding rail (24, 25; 34, 35) is present for each of these lateral edges (18, 19; 28, 29) and has a course matched to the path of motion of the lateral edge (18, 19; 28, 29), of the pane (17; 27), facing it,
- in the region of at least one of the lateral edges (18, 19; 28, 29), the pane (17; 27) is provided with a guide strip (39),
- - which is arranged at a site remote from the lower pane edge (22; 32) and
- - which is matched to the associated guiding rail (24, 25; 34, 35) and cooperates with this guiding rail (24, 25; 34, 35) instead of the edge region of the lateral edge (18, 19; 28, 29) of the pane (17; 27),
- the guide strip (39) is connected to the pane (17; 27) via an adjusting device (37; 38) by means of which the distance of the guide strip (39) from the pane (17; 27) can be adjusted.

2. A lifting window according to claim 1, having the features:
- the adjusting device (38) has a guiding device (41) by means of which the guide strip (39) is movable at least substantially perpendicular to the pane (17),
- the adjusting device (38) has a displacing device (42) by means of which the guide strip (39) can be displaced in both directions relative to the pane (17) and
- the adjusting device (38) has a securing device (43) by means of which the guide strip (39) can be fixed at a given distance from the pane (17).

3. A lifting window according to claim 2, having the features:
- the guiding device (41) is formed by a guide slide (51) and a slide guide (52) matched thereto,
- the guide slide (51) is plate-shaped and has two parallel edges (53; 54),
- the slide guide (52) is C-shaped and at least partially embraces the edges (53; 54) of the guide slide (51) and
- the guide strip (39) is securely connected to the guide slide (51).

4. A lifting window according to claim 3, having the features:
- the slide guide (52) is arranged on a base body (55) of the adjusting device (38) or is part of this base body (55),
- the base body (55) has a contact surface (56) directed parallel to the pane (17) and
- the contact surface (56) of the base body (55) rests against the pane (17) and is firmly connected thereto.

5. A lifting window according to claim 2, having the features:
- the displacing device (42) has a displacing body (61),
- - which is disc-shaped,
- - which is securely connected to a cylindrical shaft (62) rotatably mounted in a cylindrical through bore of the guide slide (51),
- - whose peripheral surface (63) is at a varying distance from the shaft axis (64) and is preferably in the form of a cam surface or an eccentric surface,
- the displacing device (42) has a link (65),
- - which is formed by a cutout at the base body (55) and
- - which has two wall surfaces (66; 67) directed at least substantially parallel to the pane (17), their clear spacing being matched to the dimensions of the displacing body (61), and
- the displacing body (61) and/or its shaft (62) is provided with operating surfaces (68) for utilisation of a tool, these preferably being formed as a hexagon head or as a hexagon socket.

6. A lifting window according to claim 2, having the features:
- the securing device (43) is formed
- - by a longitudinal portion (71) of the shaft (62) of the displacing body (61), which longitudinal portion projects out of the guide slide (51) and is provided with an external thread, and
- - by a nut (72) which can be tightened on the external thread of the shaft (62).

7. A lifting window according to claim 5, having the features:
- the link (65) for the displacing body (61) is formed
- - either by an open aperture in the wall of the base body (55)
- - or by a depression in the wall of the base body (55), with a closed rear wall.

## Revendications

1. Vitre relevable, notamment de véhicule automobile ayant les caractéristiques suivantes :
- la vitre (17; 27) relevable a deux bords latéraux (18, 19; 28, 29),
- des rails de guidage (24, 25; 34, 35),
* ces rails étant reliés à une partie de carrosserie du véhicule automobile,
* chacun des rails comporte au moins deux entretoises de guidage ayant entre elles un intervalle libre constant, déterminé,
- un dispositif de levage,
* ce dispositif est relié au bord inférieur (22, 32) de la vitre (17, 27), et
* ce dispositif forme un guidage pour le bord inférieur (22; 32) de la vitre (17; 27),
**caractérisée par** les caractéristiques suivantes :
- les deux bords latéraux (18, 19; 28, 29) de la vitre (17; 27) sont alignés parallèlement l'un par rapport à l'autre et sont dirigés dans la direction de déplacement de la vitre (17; 27) en formant les bords de guidage de la vitre (17; 27),
- pour chacun des ces bords latéraux (18, 19; 28, 29), il est prévu un rail de guidage (24, 25; 34, 35) dont le tracé correspond à la trajectoire du bord latéral correspondant (18, 19; 28, 29) de la vitre (17; 27),
- dans la zone d'au moins l'un de ses bords latéraux (18, 19; 28, 29), la vitre (17; 27) est munie d'un longeron de guidage (39),
* ce longeron étant prévu en un point éloigné du bord inférieur (22, 32) de la vitre, et
* ce longeron correspond au rail de guidage associé (24, 25; 34, 35), et à l'endroit de la zone du bord latéral (18, 19; 28, 29) de la vitre (17; 27), il coopère avec ce rail de guidage (24, 25; 34, 35),
- le longeron de guidage (39) est relié à la vitre (17; 27) par une installation de réglage (37; 38) qui permet de régler la distance entre le longeron de guidage (39) et la vitre (17; 27).

2. Vitre relevable selon la revendication 1, ayant les caractéristiques suivantes :
- l'installation de réglage (38) comporte un dispositif de guidage (41) pour guider le longeron de guidage (39) au moins sensiblement perpendiculairement à la vitre (17),
- l'installation de réglage (38) comporte un dispositif de réglage (42) à l'aide duquel on peut déplacer le longeron de guidage (39) dans les deux directions par rapport à la vitre (17), et
- l'installation de réglage (38) comporte un dispositif de fixation (43) à l'aide duquel, on fixe le longeron de guidage (39) à une certaine distance de la vitre (17).

3. Vitre relevable selon la revendication 2, ayant les caractéristiques suivantes :
- dispositif de guidage (41) formé par un chariot de guidage (51) et un guide de chariot (52) correspondant,
- le chariot de guidage (51) est en forme de plaque et comporte deux bords (53, 54),
- le guidage de chariot (52) est en forme de C et entoure au moins en partie les bords (53, 54) du chariot de guidage (51), et
- le longeron de guidage (39) est relié solidairement au chariot de guidage (51).

4. Vitre relevable selon la revendication, 3 ayant les caractéristiques suivantes :
- le guidage (52) du chariot est prévu sur un corps de base (55) de l'installation de réglage (38) ou est réalisé comme partie de ce corps de base (55),
- le corps de base (55) comporte une surface d'appui (56) alignée parallèlement à la vitre (17), et
- le corps de base (55) s'applique par sa surface d'appui (56) contre la vitre (17) et est relié solidairement à celle-ci.

5. Vitre relevable selon la revendication 2, ayant les caractéristiques suivantes :
- le dispositif de réglage (42) comporte un organe de réglage (61),
* cet organe est réalisé en forme de disque,
* cet organe est relié solidairement à un arbre cylindrique (62) guidé à rotation dans un orifice cylindrique traversant le chariot de guidage (51),
* la surface périphérique (63) de cet organe de réglage, est à une distance variable par rapport à l'axe (64) de l'arbre et elle est réalisée de préférence sous la forme d'une surface de came ou d'une surface circulaire excentrée,
- le dispositif de réglage (42) comporte une coulisse (65),
* cette coulisse est formée par une cavité du corps de base (55), et
* la coulisse comporte deux surfaces de paroi (66; 67) alignées au moins sensiblement parallèlement à la vitre (17) et dont l'intervalle libre correspond aux dimensions de l'organe de réglage (61), et
- l'organe de réglage (61) et/ou son arbre (62) sont munis de surfaces d'actionnement (68) pour appliquer un outil, ces surfaces étant réalisées de préférence comme six-pans extérieurs ou comme empreintes à six-pans.

6. Vitre relevable selon la revendication 2, ayant les caractéristiques suivantes :
- le dispositif de réglage (43) est formé par,
* un segment longitudinal (71) de l'arbre (62) de l'organe de réglage (61) qui dépasse du chariot de guidage (51) et comporte un filetage extérieur, et
* un écrou (72) qui se serre solidairement sur le filetage extérieur de l'arbre (62).

7. Vitre relevable selon la revendication 5, ayant les caractéristiques suivantes :
- la coulisse (65) de l'organe de réglage (61) est formée par :
* un passage ouvert dans la paroi du corps de base (55), ou
* une cavité dans la paroi du corps de base (55) avec une paroi arrière fermée.
